# EUROPEAN PATENT SPECIFICATION

(11) **EP 2 801 221 B1**
(45) Date of publication and mention of the grant of the patent: **18.12.2019**
(21) Application number: 13700201.0
(22) Date of filing: 02.01.2013
(51) Int. Cl.: H04W 8/24, H04W 36/00

(54) **USER EQUIPMENT CAPABILITIES INDICATION TO ENABLE INTELLIGENT HANDOVER DECISION**
ANZEIGE DER FÄHIGKEITEN EINES BENUTZERGERÄTES ZUR ERMÖGLICHUNG EINER INTELLIGENTEN ÜBERGABEENTSCHEIDUNG
INDICATION DES CAPACITÉS D'UN ÉQUIPEMENT UTILISATEUR POUR VALIDER UNE DÉCISION DE TRANSFERT INTELLIGENT

(30) Priority: 03.01.2012 US 201261582762 P
(43) Date of publication of application: 12.11.2014
(73) Proprietor: Nokia Solutions and Networks Oy, 02610 Espoo (FI)
(72) Inventor: POIKSELKÄ, Miikka Juhana, FI-02330 Espoo (FI)
(74) Representative: Style, Kelda Camilla Karen
(86) International application number: PCT/EP2013/050017
(87) International publication number: WO 2013/102630

(56) References cited:
- EP-A1- 1 933 574
- EP-A1- 2 323 455
- WO-A2-2008/002997
- WO-A2-2011/081384
- GB-A- 2 476 977
- US-A1- 2010 329 244
- SAMSUNG: "Correction of selective camping for TS 23.401", 3GPP DRAFT; S2-102422-SELECTIVE-CAMPING-ALIGNMENT-401- REL9_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 4 May 2010 (2010-05-04), XP050434584, [retrieved on 2010-05-04]
- "LTE; General Packet Radio Service (GPRS) enhancements for Evolved Universal Terrestrial Radio Access Network (E-UTRAN) access (3GPP TS 23.401 version 10.6.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V10.6.0, 1 January 2012 (2012-01-01), XP014069298, cited in the application
- HUAWEI: "Email discussion outcome for [67b#18] UMTS: DC-HSUPA in 25.331", 3GPP DRAFT; R2-097132 EMAIL DISCUSSION OUTCOME FOR 67B#18 UMTS DC-HSUPA IN 25.331_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20091109 - 20091113, 11 November 2009 (2009-11-11), XP050604855, [retrieved on 2009-11-11]

## Description

### BACKGROUND:

### Field:

Telecommunication systems may be enhanced by methods, systems, interfaces, software, and protocols that provide an indication of particular user equipment capabilities to a base station, such as an eNodeB. The indication can be, for example, an indication of a user equipment's ability to support voice over high speed packet access.

### Description of the Related Art:

Conventionally, an eNodeB does not receive an indication of a user equipment's ability to support voice over high speed packet access. Instead, conventionally, a system may require that all voice over long term evolution (VoLTE) user equipment support voice over high speed packet access functionality. Alternatively, a system may require that an eNodeB always execute single radio voice call continuity. In a further alternative, the eNodeB may always execute a packet-switched to packet-switched handover and accept that this handover may fail, lead to delay, or have other impacts on user experience or network load.

Samsung: "Correction of selective camping for TS 23.401", 3GPP Draft, S2-102422-Selective-Camping-Alignment-401-Rel9_V3, 4 May 2010, provides that a user equipment (UE) shall include an information element indicating a UE Core Network Capability when transmitting an Attach Request for E-UTRAN. The UE Core Network Capability may also sent to the eNB during a non-periodic Tracking Area Update (TAU) procedure. Triggers for initiating a TAU may include if the UE Core Network Capability information changes, or the UE returns to E-UTRAN coverage.

### SUMMARY:

According to a first embodiment, a method includes receiving, at a user equipment from an eNodeB, a user equipment capability enquiry; and in response to the receiving the user equipment capability enquiry, notifying the eNodeB from the user equipment about the user equipment's capability with respect to voice over a specified kind of internet protocol connection by providing user equipment capability information including an indication of voice over high speed packet access capability.

In a variant, the notifying includes direct notification of the access point by the user equipment or indirect notification via a mobility management entity.

In a variant, the notifying includes providing a parameter or field that indicates the capability.

In a variant, the notifying is performed during an evolved universal terrestrial radio access network attach.

In a variant, the specified kind of internet protocol connection includes voice over high speed packet access.

According to a second embodiment, a method includes transmitting, by an eNodeB to a user equipment, a user equipment enquiry; receiving a notification, at the eNodeB from the user equipment, about the user equipment's capability with respect to voice over a specified kind of internet protocol connection by receiving user equipment capability information including an indication of voice over high speed packet access capability, said notification being sent in response to the user equipment capability enquiry; and selecting a kind of handover based on the user equipment's capability.

In a variant, the method includes determining whether a target cell is capable of voice over internet protocol.

In a variant, the method further includes, when the target cell is capable of voice over internet protocol, determining whether a user equipment supports both voice over high speed packet access and packet-switched to packet-switched handover.

In a variant, the method further includes, when the user equipment supports both voice over high speed packet access and packet-switched to packet-switched handover, executing a packet-switched to packet-switched intersystem handover for voice.

In a variant, the method further includes, when the user equipment does not support both voice over high speed packet access and packet-switched to packet-switched handover, determining whether the target cell supports single radio voice call continuity.

In a variant, the method further includes, when the target cell supports single radio voice call continuity, executing single radio voice call continuity procedures.

In a variant, the method further includes, when the target cell does not support single radio voice call continuity, attempting packet-switched to packet-switched intersystem handover for voice or terminating without any handover.

According to third and fourth embodiments, a non-transitory computer readable medium is encoded with instructions that, when executed in hardware, perform a process, the process including the methods of the first and second embodiments in any of their variants.

According a fifth embodiment, an apparatus includes at least one processor and at least one memory including computer program code. The at least one memory and computer program code are configured to, with the at least one processor, cause the apparatus at least to receive, at a user equipment from an eNodeB, a user equipment capability enquiry; and in response to receiving the user equipment capability enquiry, notify the eNodeB from the user equipment about the user equipment's capability with respect to voice over a specified kind of internet protocol connection by providing user equipment capability information including an indication of voice over high speed packet access capability.

In a variant, the at least one memory and computer program code are configured to, with the at least one processor, cause the apparatus at least to notify using direct notification of the access point by the user equipment or using indirect notification via a mobility management entity.

In a variant, the at least one memory and computer program code are configured to, with the at least one processor, cause the apparatus at least to notify by providing a parameter or field that indicates the capability.

In a variant, the at least one memory and computer program code are configured to, with the at least one processor, cause the apparatus at least to notify during an evolved universal terrestrial radio access network attach.

In a variant, the specified kind of internet protocol connection includes voice over high speed packet access.

According a sixth embodiment, an apparatus includes at least one processor and at least one memory including computer program code. The at least one memory and computer program code are configured to, with the at least one processor, cause the apparatus at least to transmit, by an eNodeB to a user equipment, a user equipment enquiry; and receive a notification, at the eNodeB from the user equipment, about the user equipment's capability with respect to voice over a specified kind of internet protocol connection by receiving user equipment capability information including an indication of voice over high speed packet access capability, said notification being sent in response to the user equipment capability enquiry; and select a kind of handover based on the user equipment's capability.

In a variant, the at least one memory and computer program code are configured to, with the at least one processor, cause the apparatus at least to determine whether a target cell is capable of voice over internet protocol.

In a variant, the at least one memory and computer program code are configured to, with the at least one processor, cause the apparatus at least to, when the target cell is capable of voice over internet protocol, determine whether a user equipment supports both voice over high speed packet access and packet-switched to packet-switched handover.

In a variant, the at least one memory and computer program code are configured to, with the at least one processor, cause the apparatus at least to, when the user equipment supports both voice over high speed packet access and packet-switched to packet-switched handover, execute a packet-switched to packet-switched intersystem handover for voice.

In a variant, the at least one memory and computer program code are configured to, with the at least one processor, cause the apparatus at least to, when the user equipment does not support both voice over high speed packet access and packet-switched to packet-switched handover, determine whether the target cell supports single radio voice call continuity.

In a variant, the at least one memory and computer program code are configured to, with the at least one processor, cause the apparatus at least to, when the target cell supports single radio voice call continuity, execute single radio voice call continuity procedures.

In a variant, the at least one memory and computer program code are configured to, with the at least one processor, cause the apparatus at least to, when the target cell does not support single radio voice call continuity, attempt packet-switched to packet-switched intersystem handover for voice or terminate without any handover.

### BRIEF DESCRIPTION OF THE DRAWINGS:

For proper understanding of the invention, reference should be made to the accompanying drawings, wherein: equipment supports both voice over high speed packet access and packet-switched to packet-switched handover.

In a variant, the apparatus includes executing means for, when the user equipment supports both voice over high speed packet access and packet-switched to packet-switched handover, executing a packet-switched to packet-switched intersystem handover for voice.

In a variant, the apparatus includes determiner means for, when the user equipment does not support both voice over high speed packet access and packet-switched to packet-switched handover, determining whether the target cell supports single radio voice call continuity.

In a variant, the apparatus includes execution means for, when the target cell supports single radio voice call continuity, executing single radio voice call continuity procedures.

In a variant, the apparatus includes handover means for, when the target cell does not support single radio voice call continuity, attempting packet-switched to packet-switched intersystem handover for voice or terminating without any handover.

According to a ninth embodiment, a system includes a first apparatus and a second apparatus. The first apparatus includes notifying means for preparing a notification to an access point from a user equipment about the user equipment's capability with respect to voice over a specified kind of internet protocol connection. The first apparatus also includes transmitting means for transmitting the notification. The second apparatus includes receiving means for receiving the notification, at the access point from the user equipment, about the user equipment's capability with respect to voice over the specified kind of internet protocol connection. The second apparatus also includes selecting means for selecting a kind of handover based on the user equipment's capability. The system can, in variants, incorporate the variants of either or both of the seventh and eighth embodiments.

### BRIEF DESCRIPTION OF THE DRAWINGS:

For proper understanding of the invention, reference should be made to the accompanying drawings, wherein:
Figure 1 illustrates provision of an indication to the eNodeB via a mobility management entity, according to certain embodiments.
Figure 2 illustrates a direct transfer of an indication regarding a user equipment's capabilities to an eNodeB according to certain embodiments.
Figure 3 illustrates handover selection logic in an eNodeB according to certain embodiments.
Figure 4 illustrates a system according to certain embodiments.

### DETAILED DESCRIPTION:

Certain embodiments may provide an indication of user equipment capabilities, such as voice over high speed packet access (HSPA) capabilities, to an access point. The access point can be a base station, such as an eNodeB. The eNodeB can take into account the user equipment's capabilities when it selects a handover mechanism from evolved universal terrestrial radio access network (E-UTRAN) to universal terrestrial radio access network (UTRAN). While certain embodiments are described in terms of UTRAN and E-UTRAN, it should be understood that other embodiments other network types can be used. Likewise, other capabilities than the user equipment's ability to support voice over HSPA can be used.

Thus, certain embodiments can relate to 3rd generation partnership project (3GPP) systems and particularly to voice call continuity (VCC) functionality. In 3GPP systems, there are at least two ways to perform VCC from E-UTRAN to HSPA. A first option is known as single radio VCC (SR-VCC). SR-VCC is specified, for example, in 3GPP technical specification (TS) 23.216 and TS 24.237, which are incorporated herein by reference in their entirety. A second option is packet switched (PS) to PS handover (HO). PS-to-PS HO is specified, for example, in 3GPP TS 23.401 and 24.301, which are incorporated herein by reference in their entirety.

When SR-VCC is successfully executed, the voice call continues using circuit switched (CS) speech in the HSPA system. When PS-PS HO is successfully executed, the voice call continues using internet protocol (IP) multimedia subsystem (IMS) based voice over IP (VoIP) in the HSPA system.

To configure operator's voice domain preferences, the operator can use an IMS management object, as discussed in 3GPP TS 24.167, which is incorporated by reference in its entirety. Four different values have been defined for E-UTRAN access and three values for UTRAN access as follows: CS voice only, CS voice preferred, IMS PS voice as secondary, IMS PS voice preferred, CS voice as secondary, IMS PS voice only (applies only for E-UTRAN).

Each user equipment (UE) may have usage setting for E-UTRAN. Two values in particular may be defined: voice centric mode or data centric mode. The value may be set by the user equipment manufacturer, retailer, or end user. For further discussion, see 3GPP TS 23.221, which is incorporated by reference in its entirety.

In view of the above, several scenarios may exist. A UE may or may not support SR-VCC functionality. A UE may or may not support PS-PS HO functionality. A UE may support Voice over LTE (VoLTE), a UE may support Voice over HSPA (VoHSPA), and a UE may support both VoLTE and VoHSPA simultaneously. Moreover, a UE may support both SR-VCC and PS-PS HO simultaneously.

Mobile station (MS) network capability contains information about a UE's support for SR-VCC, as discussed at 3GPP TS 24.008 section 10.5.5.12, which is incorporated herein by reference in its entirety. Likewise, MS radio access capability contains information whether a UE supports PS Handover, as discussed at 3GPP TS 24.008 section 10.5.5.12a, which is incorporated herein by reference in its entirety. Furthermore, UE-E-UTRA-capability contains a UE's capabilities, which are directly transferred between a UE and an eNodeB, as discussed at sections 5.6.3 and 6.3.6 of 3GPP TS 36.331, which is incorporated herein by reference in its entirety.

When a UE performs E-UTRAN initial attachment, the UE can signal its usage settings, voice domain preference, SR-VCC capability (part of MS network capability) and PS-PS HO capability (part of MS Radio Access capability), as described in 3GPP TS 23.401 section 5.3.2.1, which is incorporated herein by reference in its entirety.

If E-UTRAN attach is successful and a mobility management entity (MME) signals to the UE that IMS based VoIP is possible (IMS Voice over PS session supported indication is set to true), the MME can also signal SR-VCC possible to eNodeB, as described at step 17 in section 5.3.2.1 of 3GPP TS 23.401, which is incorporated herein by reference in its entirety. Then, the UE can perform IMS registration and can be ready to make and receive voice communication over E-UTRAN. When a UE signals both "voice centric" and "IMS PS Voice preferred," "CS Voice as secondary," or "IMS PS Voice only" to the MME, the MME may assume that voice over long term evolution (VoLTE) is supported in the UE.

When the voice communication takes place over E-UTRAN it is possible that the UE may move to an edge of E-UTRAN coverage. Then, the eNodeB may need to take action to perform handover from E-UTRAN to HSPA. The eNodeB has at least two choices: it can execute an SR-VCC procedure as described in chapter 6 of 3GPP TS 23.216 (which is incorporated herein in its entirety) or it can execute an E-UTRAN to UTRAN Inter radio access technology (RAT) handover as described in section 5.5.2 of 3GPP TS 23.401, which is incorporated herein in its entirety.

Decision criteria for SR-VCC execution can be applied. For example, the eNodeB may know SR-VCC capability and it may know the target cell capability (not capable of VoIP, in one example) and based on these factors it can initiate a SR-VCC procedure (because, in this instance, the target is not capable of VoIP) by sending a handover required message with a SR-VCC indication to the MME. SR-VCC conventionally forces a call to continue in a CS domain. Therefore, PS-PS HO for VCC may be an option that an operator may prefer.

In the case of a PS-PS HO option, the eNodeB knows whether the UE supports PS-PS HO and it knows whether the target (3G HSPA) cell supports VoIP, but the eNodeB does not conventionally know whether a UE supports VoHSPA. During the E-UTRAN attachment, the UE can signal its usage setting (voice) but it is E-UTRAN specific information.

If the UE supports the PS-PS HO procedure (required generally for data continuity and PS-PS HO indication does not differentiate data and voice application) and the target cell supports VoHSPA (IMS based voice over HSPA), then, when the eNodeB decides to execute E-UTRAN to UTRAN Inter RAT handover, the following scenarios are possible. If the UE supports VoHSPA functionality, then everything will be fine and voice service will continue smoothly in HSPA. However, if the UE does not support VoHSPA functionality then VCC will fail. For example, bearer resources may be downgraded to best effort instead, or PS-PS HO may eventually fail as the target serving general packet radio service (GPRS) support node (SGSN) is not able to set up the required bearers.

For example, the UE may not support conversational traffic class bearers in GPRS. Alternatively, the UE may not support a network initiated packet data protocol (PDP) context. Either of these support issues may lead to VCC failure.

In certain instances, VoLTE capable devices may not necessarily support VoHSPA. However, other VoLTE capable devices may support VoHSPA. Thus, in certain embodiments an eNodeB is configured to detect whether the eNodeB is to arrange a SR-VCC procedure or a PS-PS HO procedure, on a per UE basis.

In contrast, in certain embodiments an eNodeB is made aware of a UE's capability for VoHSPA. Moreover, in certain embodiments the eNodeB takes a UE's capability for VoHSPA into consideration when selecting a handover mechanism from E-UTRAN to UTRAN.

Thus, certain embodiments provide a way to signal VoHSPA support indication from a UE to an eNodeB either directly between the UE and the eNodeB or via a MME (for example, from a UE to a MME and from thence to an eNodeB). Moreover, certain embodiments provide handover decision logic in an eNodeB which allows the eNodeB to prefer PS-PS HO whenever possible, without preferring PS-PS HO when it is not possible.

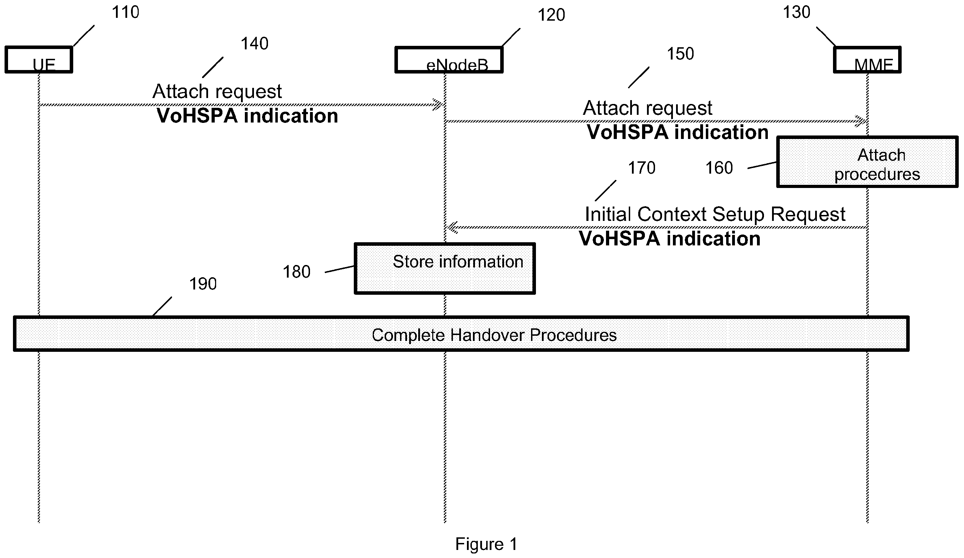

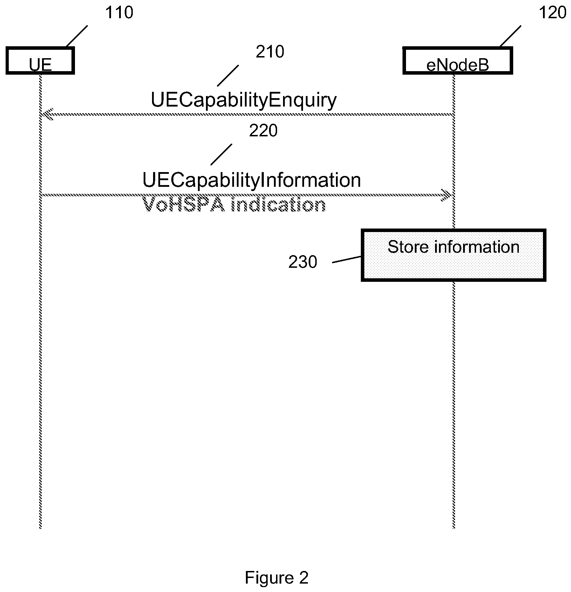

Multiple alternatives exist. For example, as will be discussed below, a parameter can be defined to signal whether a UE supports VoHSPA. This could be a parameter that is signaled during E-UTRAN attach to the MME, which delivers it to the eNodeB. It could also be a new value as part of "MS network capability" as will be discussed in reference to Figure 1. It could alternatively be a parameter that is signaled directly from the UE to the eNodeB, as will be discussed in reference to figure 2.

Alternatively, a UE usage setting parameter can be extended to contain access specific information such as voice centric_E-UTRAN, voice centric_UTRAN, or voice centric_all, as will be discussed in reference to Figure 1. Furthermore, the PS-PS HO indication can be extended to explicitly express whether a UE supports PS-PS HO for voice and/or non-voice applications, as discussed below in reference to figures 1 and 2.

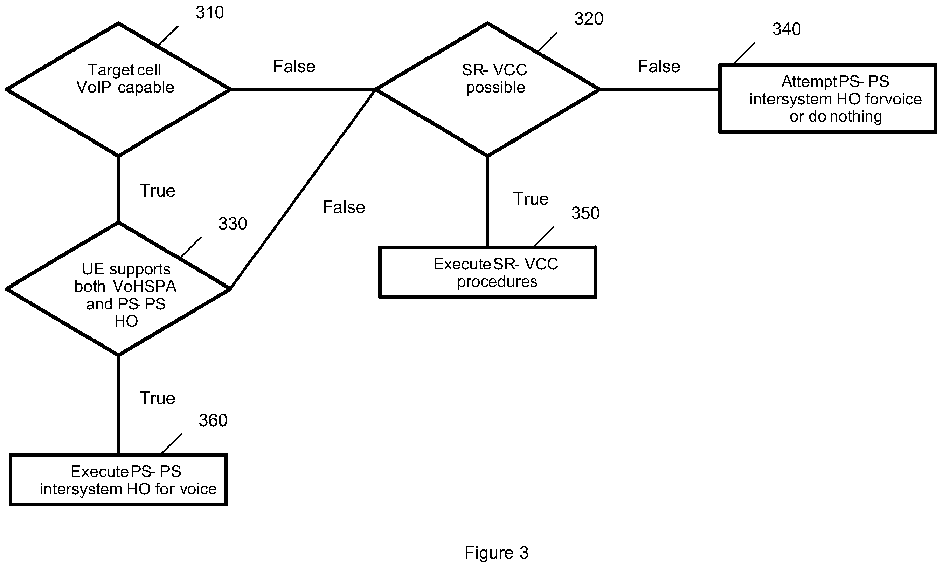

Thus, certain embodiments can make an eNodeB aware of whether PS-PS HO for voice bearer will succeed for each user equipment. Thus, certain embodiments may improve overall VCC performance in the system, as the eNodeB can prefer PS-PS HO over SR-VCC whenever it is possible, as will be discussed below with reference to Figure 3.

Figure 1 illustrates provision of an indication to the eNodeB via a mobility management entity, for example an indirect notification according to certain embodiments. As shown in Figure 1, a system includes user equipment (UE) 110, eNodeB 120, and mobility management entity (MME) 130. At 140, the user equipment 110 can send an attach request including a voice over HSPA (VoHSPA) indication to the eNodeB 120. In turn, at 150, the eNodeB 120 can pass the attach request and indication along to the mobility management entity 130. Then, at 160, attach procedures can proceed. For example, conventional attachment procedures can follow. Then, at 170, the mobility management entity 130 can provide an initial context setup request to the eNodeB 120, including the indication. Then, at 180, the eNodeB 120 can store information including the indication. Finally, at 190, the system can complete handover (or other) procedures, with the eNodeB 120 acting based on the stored information.

In Figure 1, the generic term "VoHSPA indication" is used. There are various ways that this indication can be provided. The indication can be provided as a parameter with coding as will be discussed below. Alternatively, the indication can be a value within mobile station (MS) network capability, as will be discussed below. Alternatively, the indication can be a value within MS radio access capability, as will be discussed below. In another alternative, the indication can be provided as an extended UE usage setting, as will be discussed below. Furthermore, the indication can be provided as an extended PS-PS PS handover capability, as will also be discussed below.

Figure 2 illustrates a direct transfer of an indication regarding a user equipment's capabilities to an eNodeB according to certain embodiments. As shown in Figure 2, at 210, eNodeB 120 can send a user equipment capability enquiry (UECapabilityEnquiry) to the user equipment (UE) 110. The UECapaibilityEnquiry can be provided as specified in 3GPP TS 36.331, sections 5.6.3 and 6.3.6, which are incorporated herein in their entirety. Then, at 220, in response to the UECapabilityEnquiry, the user equipment 110 can provide user equipment capability information (UECapbilitylnformation) including an indication of voice over HSPA capability. Finally, at 230, the eNodeB 120 can store the information.

Figure 3 illustrates handover selection logic in an eNodeB according to certain embodiments. As shown in Figure 3, at 310, the eNodeB can determine whether the target cell is capable of voice over IP (VoIP). If so, then the eNodeB can proceed to determine, at 330, whether the user equipment supports both VoHSPA and PS-PS HO. If so, then at 360 the eNodeB can execute PS to PS intersystem handover for voice. If not, or if the target cell is not VoIP capable, the eNodeB can, at 320, determine whether the target cell is able to support single radio voice call continuity (SR-VCC). If not, then the eNodeB can, at 340, either attempt a PS to PS intersystem handover, or do nothing. However, if SR-VCC is possible in the target cell, then the eNodeB can execute SR-VCC procedures at 350.

As mentioned above, one option is to convey the VoHSPA indication in its own parameter. The UE can then signal this parameter as part of an E-UTRAN attach as follows: the UE initiates the Attach procedure by the transmission, to the eNodeB, of an Attach Request (IMSI or old GUTI, Old GUTI type, last visited TAI (if available), UE Core Network Capability, UE Specific DRX parameters, Attach Type, ESM message container (Request Type, PDN Type, Protocol Configuration Options, Ciphered Options Transfer Flag), KSIASME, NAS sequence number, NAS-MAC, additional GUTI, P-TMSI signature, Voice domain preference and UE's usage setting, MS Network Capability, VoHSPA indication) message together with RRC parameters indicating the Selected Network and the old GUMMEI. Thus, in this case the VoHSPA is the last parameter of the attach request message, although the parameter can be included in a different order.

In another alternative, a VoHSPA indication can be provided as part of the MS network capability. For example, the MS network capability parameter can be defined so that a first bit is a VoHSPA capability bit, in which 1 means that VoHSPA is supported and 0 means that VoHSPA is not supported, or vice versa. The remaining bits of MS network capability can be used to signal other user equipment capabilities. This MS network capability can then be communicated to the eNodeB during E-UTRAN attach.

Similarly, the first bit of the MS radio access capability parameter can be modified to indicate VoHSPA capability and communicated in E-UTRAN attach. The modifications can be similar to those described above for MS network capability.

In another instance, extended user equipment usage settings can be provided. For example, voice centric values of voice centric_E-UTRAN, voice centric_UTRAN, and voice centric_all can be included as voice centric values. These values (or one of them) can be communicated in E-UTRAN attach.

In a further instance, the indication can be provided in MS radio capability. Specifically, in addition to a bit that indicates whether a mobile station supports packet switched (PS) handover, a further bit can be used to indicate whether the mobile station supports PS handover for voice, or the meaning of the bit can be altered from the conventional meaning. The PS Handover Capability can apply to all radio access technologies (RATs) and modes indicated as supported in this information element, except for E-UTRA, where the support can be indicated separately in the "GERAN to E-UTRA support in GERAN packet transfer mode" field.

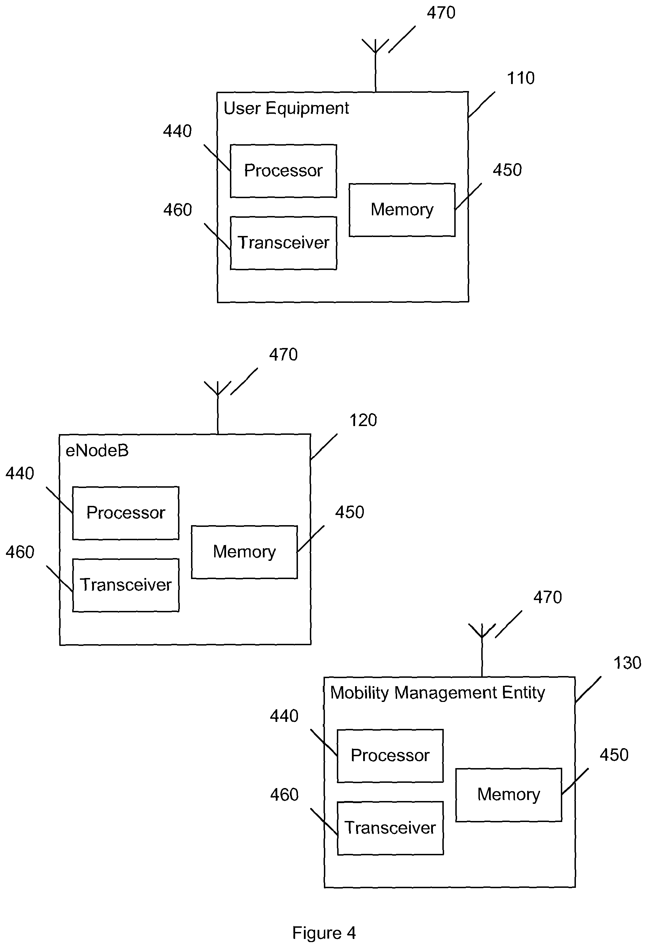

Figure 4 illustrates a system according to certain embodiments. In an example embodiment, a system may include three devices, user equipment UE) 110, eNodeB 120, and mobility management entity (MME) 130. Each of the devices 110, 120, and 130 may be equipped with at least one processor 440, at least one memory 450 (including computer program instructions or code), a transceiver 460, and an antenna 470. There is no requirement that each of these devices be so equipped. For example, the MME 130 may be equipped only for wired communication.

The transceiver 460 can be a transmitter, a receiver, both a transmitter and a receiver, or a unit that is configured both for transmission and reception. The transceiver 460 can be coupled to one or more antenna(s) 470, which may include a directional antenna.

The at least one processor 440 can be variously embodied by any computational or data processing device, such as a central processing unit (CPU) or application specific integrated circuit (ASIC). The at least one processor 440 can be implemented as one or a plurality of controllers.

The at least one memory 450 can be any suitable storage device, such as a non-transitory computer-readable medium. For example, a hard disk drive (HDD) or random access memory (RAM) can be used in the at least one memory 450. The at least one memory 450 can be on a same chip as the at least one processor 440, or may be separate from the at least one processor 440.

The computer program instructions may be any suitable form of computer program code. For example, the computer program instructions may be a compiled or interpreted computer program.

The at least one memory 450 and computer program instructions can be configured to, with the at least one processor 440, cause a hardware apparatus (for example, user equipment 110, eNodeB 120, or MME 130) to perform a process, such as any of the processes described herein (see, for example, Figure 1-3).

Thus, in certain embodiments, a non-transitory computer-readable medium can be encoded with computer instructions that, when executed in hardware perform a process, such as one of the processes described herein. Alternatively, certain embodiments of the present invention may be performed entirely in hardware.

The devices of the system may also include additional components. For example, each of user equipment 110, eNodeB 120, and MME 130 can include a user interface that is operable connected to the processor 440 and memory 450. That user interface can include a display, such as a liquid crystal display (LCD) or organic electroluminescent display (OELD), as well as speakers or audio outputs. Tactile outputs, such as a haptic feedback system, can also be included. The user interface may have a touch screen to receive user input. User input can also be provided by a keypad, keyboard, microphone, joystick, mouse, trackball, or other input device. Of course, there is no requirement that the devices include a user interface. For example, the eNodeB 120 and MME 130 may be embodied as rack-mounted computers.

In certain embodiments, a method includes notifying an eNodeB from a user equipment about the user equipment's capability with respect to voice over a specified kind of internet protocol connection.

The notifying can include direct notification and indirect notification via a mobility management entity. The notifying can include providing a parameter or field that indicates the capability. The notifying can be performed during an E-UTRAN attach. The specified kind of internet protocol connection can be voice over high speed packet access.

In other embodiments, a method includes receiving a notification, at an eNodeB from a user equipment, about the user equipment's capability with respect to voice over a specified kind of internet protocol connection. The method also includes selecting a kind of handover based on the user equipment's capability.

The method can also include determining whether a target cell is capable of voice over internet protocol.

When the target cell is capable of voice over internet protocol, the method can further include determining whether a user equipment supports both VoHSPA and packet-switched to packet-switched handover.

When the user equipment supports both VoHSPA and packet-switched to packet-switched handover, the method can further include executing a packet-switched to packet-switched intersystem handover for voice.

When the user equipment does not support both VoHSPA and packet-switched to packet-switched handover, the method can include determining whether the target cell supports single radio voice call continuity.

When the target cell supports single radio voice call continuity, the method can include executing single radio voice call continuity procedures.

When the target cell does not support single radio voice call continuity, the method can include attempting packet-switched to packet-switched intersystem handover for voice or the method can terminate without any handover.

In certain embodiments, a computer readable medium (for example, a non-transitory computer readable medium) is encoded with instructions that, when executed in hardware, perform one of the above-described methods.

An apparatus, according to certain embodiments, includes at least one processor and at least one memory including computer program code. The at least one memory and computer program code is configured to, with the at least one processor, cause the apparatus at least to notify an eNodeB from a user equipment about the user equipment's capability with respect to voice over a specified kind of internet protocol connection. The apparatus can also be configured with the various modifications described above.

An apparatus, according to other embodiments, also includes at least one processor and at least one memory including computer program code. The at least one memory and computer program code is configured to, with the at least one processor, cause the apparatus at least to receive a notification, at an eNodeB from a user equipment, about the user equipment's capability with respect to voice over a specified kind of internet protocol connection. The at least one memory and computer program code are also configured to, with the at least one processor, cause the apparatus at least to select a kind of handover based on the user equipment's capability.

According to certain embodiments, an apparatus includes notifying means for preparing a notification to an eNodeB from a user equipment about the user equipment's capability with respect to voice over a specified kind of internet protocol connection. The apparatus also includes transmitting means for transmitting the notification.

In certain embodiments, an apparatus includes receiving means for receiving a notification, at an eNodeB from a user equipment, about the user equipment's capability with respect to voice over a specified kind of internet protocol connection. The apparatus also includes selecting means for selecting a kind of handover based on the user equipment's capability.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention, which is given by the claims.

## Claims

1. A method, comprising:
receiving, at a user equipment (110) from an eNodeB (120), a user equipment capability enquiry (210); and
in response to the receiving the user equipment capability enquiry, notifying (220) the eNodeB from the user equipment about the user equipment's capability with respect to voice over a specified kind of internet protocol connection by providing user equipment capability information including an indication of voice over high speed packet access capability.

2. A method, comprising:
transmitting, by an eNodeB (120) to a user equipment (110), a user equipment enquiry (210);
receiving a notification (220), at the eNodeB (120) from the user equipment (110), about the user equipment's capability with respect to voice over a specified kind of internet protocol connection by receiving user equipment capability information including an indication of voice over high speed packet access capability, said notification being sent in response to the user equipment capability enquiry; and
selecting a kind of handover based on the user equipment's capability.

3. The method of claim 2, further comprising:
determining (310) whether a target cell is capable of voice over internet protocol.

4. The method of claim 3, further comprising:
when the target cell is capable of voice over internet protocol, determining (330) whether the user equipment supports both voice over high speed packet access and packet-switched to packet-switched handover.

5. The method of claim 4, further comprising:
when the user equipment supports both voice over high speed packet access and pack-switched to packet-switched handover, executing (360) a packet-switched to packet-switched intersystem handover for voice.

6. An apparatus, comprising:
receiving means for receiving, at a user equipment from an eNodeB, a user equipment capability enquiry (210);
notifying means for preparing, in response to the receiving the user equipment capability enquiry, a notification to the eNodeB from the user equipment about the user equipment's capability with respect to voice over a specified kind of internet protocol connection, the notifying means enabled to provide user equipment capability information including an indication of voice over high speed packet access capability; and
transmitting means for transmitting the notification.

7. The apparatus of claim 6, wherein the notifying means comprises means for providing a parameter or field that indicates the capability.

8. The apparatus of claim 6, wherein the specified kind of internet protocol connection comprises voice over high speed packet access.

9. An apparatus, comprising:
transmitting means for transmitting, by an eNodeB to a user equipment (110), a user equipment enquiry;
receiving means for receiving a notification, at the eNodeB from the user equipment, about the user equipment's capability with respect to voice over a specified kind of internet protocol connection, the receiving means enabled to receive user equipment capability information including an indication of voice over high speed packet access capability, said notification being sent in response to the user equipment capability enquiry; and
selecting means for selecting a kind of handover based on the user equipment's capability.

10. The apparatus of claim 9, further comprising:
determining means for determining whether a target cell is capable of voice over internet protocol.

11. The apparatus of claim 10, further comprising:
determination means for, when the target cell is capable of voice over internet protocol, determining whether the user equipment supports both voice over high speed packet access and packet-switched to packet-switched handover.

12. The apparatus of claim 11, further comprising:
executing means for, when the user equipment supports both voice over high speed packet access and packet-switched to packet-switched handover, executing a packet-switched to packet-switched intersystem handover for voice.

13. The apparatus of claim 10, further comprising:
determiner means for, when the user equipment does not support both voice over high speed packet access and packet-switched to packet-switched handover, determining whether the target cell supports single radio voice call continuity.

14. The apparatus of claim 13, further comprising:
execution means for, when the target cell supports single radio voice call continuity, executing single radio voice call continuity procedures.

15. The apparatus of claim 13, further comprising:
handover means for, when the target cell does not support single radio voice call continuity, attempting packet-switched to packet-switched intersystem handover for voice or terminating without any handover.

## Patentansprüche

1. Verfahren, umfassend:
Empfangen, an einem Benutzergerät (110), einer Benutzergeräte-Fähigkeitsanfrage (210) von einem eNodeB (120); und
als Reaktion auf das Empfangen der Benutzergeräte-Fähigkeitsanfrage, Benachrichtigen (220) des eNodeB von dem Benutzergerät über eine Fähigkeit des Benutzergeräts in Bezug auf Sprache über eine spezifizierte Art von Internetprotokollverbindung durch Bereitstellen von Benutzergeräte-Fähigkeitsinformationen, die eine Angabe zu einer Fähigkeit zu Sprache über einen Hochgeschwindigkeitspaketzugriff aufweisen.

2. Verfahren, umfassend:
Übertragen, durch einen eNodeB (120) an ein Benutzergerät (110), einer Benutzergeräteanfrage (210) ;
Empfangen einer Benachrichtigung (220) an dem eNodeB (120) von dem Benutzergerät (110) über eine Fähigkeit des Benutzergeräts in Bezug auf Sprache über eine spezifizierte Art von Internetprotokollverbindung durch Empfangen von Benutzergeräte-Fähigkeitsinformationen, die eine Angabe zu einer Fähigkeit zu Sprache über Hochgeschwindigkeitspaketzugriff aufweisen, wobei die Benachrichtigung als Reaktion auf die Benutzergeräte-Fähigkeitsanfrage gesendet wird; und
Auswählen einer Art von Übergabe basierend auf der Fähigkeit des Benutzergeräts.

3. Verfahren nach Anspruch 2, ferner umfassend:
Bestimmen (310), ob eine Zielzelle zu Sprache über das Internetprotokoll fähig ist.

4. Verfahren nach Anspruch 3, ferner umfassend:
wenn die Zielzelle zu Sprache über das Internetprotokoll fähig ist, Bestimmen (330), ob das Benutzergerät sowohl Sprache über Hochgeschwindigkeitspaketzugriff als auch eine Paketvermittlung-zu-Paketvermittlung-Übergabe unterstützt.

5. Verfahren nach Anspruch 4, ferner umfassend:
wenn das Benutzergerät sowohl Sprache über Hochgeschwindigkeitspaketzugriff als auch eine Paket-vermittlungs-zu-Paketvermittlung-Übergabe unterstützt, Ausführen (360) einer Paketvermittlungs-zu-Paketvermittlungs-Intersystem-Übergabe für Sprache.

6. Vorrichtung, umfassend:
Empfangsmittel zum Empfangen, an einem Benutzergerät, einer Benutzergeräte-Fähigkeitsanfrage (210) von einem eNodeB;
Benachrichtigungsmittel zum Erstellen, als Reaktion auf das Empfangen der Benutzergerät-Fähigkeitsanfrage, einer Benachrichtigung an den eNodeB von dem Benutzergerät über eine Fähigkeit des Benutzergerät in Bezug auf Sprache über eine spezifizierte Art von Internetprotokollverbindung, wobei die Benachrichtigungsmittel ein Bereitstellen von Benutzergeräte-Fähigkeitsinformationen ermöglichen, die eine Angabe zu einer Fähigkeit zu Sprache über Hochgeschwindigkeitspaketzugriff aufweisen; und
Übertragungsmittel zum Übertragen der Benachrichtigung.

7. Vorrichtung nach Anspruch 6, wobei die Benachrichtigungsmittel Mittel zum Bereitstellen eines die Fähigkeit angebenden Parameters oder Feldes umfasst.

8. Vorrichtung nach Anspruch 6, wobei die spezifizierte Art von Internetprotokollverbindung Sprache über Hochgeschwindigkeitspaketzugriff umfasst.

9. Vorrichtung, umfassend:
Übertragungsmittel zum Übertragen, durch einen eNodeB an ein Benutzergerät (110), einer Benutzergeräteanfrage;
Empfangsmittel zum Empfangen einer Benachrichtigung an dem eNodeB von dem Benutzergerät über eine Fähigkeit des Benutzergeräts in Bezug auf Sprache über eine bestimmte Art von Internetprotokollverbindung, wobei die Empfangsmittel ermöglichen, Benutzergeräte-Fähigkeitsinformationen zu empfangen, die eine Angabe zu einer Fähigkeit zu Sprache über Hochgeschwindigkeitspaketzugriff aufweisen, wobei die Benachrichtigung als Reaktion auf die Benutzergeräte-Fähigkeitsanfrage gesendet wird; und
Auswahlmittel zum Auswählen einer Übergabeart basierend auf der Fähigkeit des Benutzergeräts.

10. Vorrichtung nach Anspruch 9, ferner umfassend:
Bestimmungsmittel zum Bestimmen, ob eine Zielzelle zu Sprache über das Internetprotokoll fähig ist.

11. Vorrichtung nach Anspruch 10, ferner umfassend:
Bestimmungsmittel zum Bestimmen, wenn die Zielzelle zu Sprache über das Internetprotokoll fähig ist, ob das Benutzergerät sowohl Sprache über Hochgeschwindigkeitspaketzugriff als auch eine Paketvermittlungs-zu-Paketvermittlungs-Übergabe unterstützt.

12. Vorrichtung nach Anspruch 11, ferner umfassend:
Ausführungsmittel zum Ausführen, wenn das Benutzergerät sowohl Sprache über Hochgeschwindigkeitspaketzugriff als auch eine Paketvermittlungs-zu-Paketvermittlungs-Übergabe unterstützt, einer Paketvermittlungs-zu-Paketvermittlungs-Übergabe für Sprache.

13. Vorrichtung nach Anspruch 10, ferner umfassend:
Bestimmungsmittel zum Bestimmen, wenn das Benutzergerät nicht sowohl Sprache über Hochgeschwindigkeitspaketzugriff als auch eine Paketvermittlungs-zu-Paketvermittlungs-Intersystem-Übergabe unterstützt, ob die Zielzelle eine Single Radio Voice Call Continuity unterstützt.

14. Vorrichtung nach Anspruch 13, ferner umfassend:
Ausführungsmittel für das Ausführen, wenn die Zielzelle Single Radio Voice Call Continuity unterstützt, von Single Radio Voice Call Continuity Prozeduren.

15. Vorrichtung nach Anspruch 13, ferner umfassend:
Übergabemittel zum, wenn die Zielzelle keine Single Radio Voice Call Continuity unterstützt, Versuchen einer Paketvermittlungs-zu-Paketvermittlungs-Intersystem-Übergabe für Sprache oder Beenden ohne Übergabe.

## Revendications

1. Procédé comprenant :
la réception, au niveau d'un équipement d'utilisateur (110) depuis un eNodeB (120), d'une demande de capacité d'équipement d'utilisateur (210) ; et
en réponse à la réception de la demande de capacité d'équipement d'utilisateur, la notification (220) à l'eNodeB depuis l'équipement d'utilisateur concernant la capacité d'équipement d'utilisateur concernant la voix sur un type spécifié de connexion de protocole Internet en fournissant des informations de capacité d'équipement d'utilisateur comprenant une indication de voix sur une capacité d'accès par paquets à grande vitesse.

2. Procédé comprenant :
la transmission, avec un eNodeB (120) vers un équipement d'utilisateur (110), d'une demande d'équipement d'utilisateur (210) ;
la réception d'une notification (220), au niveau de l'eNodeB (120) depuis l'équipement d'utilisateur (110), concernant la capacité d'équipement d'utilisateur par rapport à la voix sur un type spécifié de connexion de protocole Internet en recevant des informations de capacité d'équipement d'utilisateur comprenant une indication de voix sur une capacité d'accès par paquets à grande vitesse, ladite notification étant envoyée en réponse à la demande de capacité d'équipement d'utilisateur ; et
la sélection d'un type de transfert en fonction de la capacité d'équipement d'utilisateur.

3. Procédé selon la revendication 2, comprenant en outre :
la détermination (310) qu'une cellule cible est capable ou non de voix sur un protocole Internet.

4. Procédé selon la revendication 3, comprenant en outre :
lorsque la cellule cible est capable de voix sur un protocole Internet, la détermination (330) que l'équipement d'utilisateur prend en charge ou non la voix sur un accès par paquets à grande vitesse ainsi qu'un transfert commuté-par-paquet à commuté-par-paquet.

5. Procédé selon la revendication 4, comprenant en outre :
lorsque l'équipement d'utilisateur prend en charge la voix sur un accès par paquets à grande vitesse ainsi qu'un transfert commuté-par-paquet à commuté-par-paquet, l'exécution (360) d'un transfert inter-système commuté-par-paquet à commuté-par-paquet pour la voix.

6. Appareil comprenant :
un moyen de réception pour recevoir, au niveau d'un équipement d'utilisateur depuis un eNodeB, une demande de capacité d'équipement d'utilisateur (210) ;
un moyen de notification pour préparer, en réponse à la réception de la demande de capacité d'équipement d'utilisateur, une notification vers l'eNodeB depuis l'équipement d'utilisateur concernant la capacité d'équipement d'utilisateur concernant la voix sur un type spécifié de connexion de protocole Internet, le moyen de notification pouvant fournir des informations de capacité d'équipement d'utilisateur comprenant une indication de voix sur une capacité d'accès par paquets à grande vitesse ; et
un moyen de transmission pour transmettre la notification.

7. Appareil selon la revendication 6, dans lequel le moyen de notification comprend un moyen pour fournir un paramètre ou un champ qui indique la capacité.

8. Appareil selon la revendication 6, dans lequel le type spécifié de connexion de protocole Internet comprend la voix sur un accès par paquets à grande vitesse.

9. Appareil comprenant :
un moyen de transmission pour transmettre, avec un eNodeB vers un équipement d'utilisateur (110), une demande d'équipement d'utilisateur ;
un moyen de réception pour recevoir une notification, au niveau de l'eNodeB depuis l'équipement d'utilisateur, concernant la capacité d'équipement d'utilisateur par rapport à la voix sur un type spécifié de connexion de protocole Internet, le moyen de réception pouvant recevoir des informations de capacité d'équipement d'utilisateur comprenant une indication de voix sur une capacité d'accès par paquets à grande vitesse, ladite notification étant envoyée en réponse à la demande de capacité d'équipement d'utilisateur ; et
un moyen de sélection pour choisir un type de transfert en fonction de la capacité d'équipement d'utilisateur.

10. Appareil selon la revendication 9, comprenant en outre :
un moyen de détermination pour déterminer si une cellule cible est capable de voix sur un protocole Internet.

11. Appareil selon la revendication 10, comprenant en outre :
un moyen de détermination pour, lorsque la cellule cible est capable de voix sur un protocole Internet, déterminer si l'équipement d'utilisateur prend en charge la voix sur un accès par paquets à grande vitesse ainsi qu'un transfert commuté-par-paquet à commuté-par-paquet.

12. Appareil selon la revendication 11, comprenant en outre :
un moyen d'exécution pour, lorsque l'équipement d'utilisateur prend en charge la voix sur un accès par paquets à grande vitesse ainsi qu'un transfert commuté-par-paquet à commuté-par-paquet, exécuter un transfert inter-système commuté-par-paquet à commuté-par-paquet pour la voix.

13. Appareil selon la revendication 10, comprenant en outre :
un moyen de détermination pour, lorsque l'équipement d'utilisateur ne prend en charge ni la voix sur un accès par paquets à grande vitesse, ni un transfert commuté-par-paquet à commuté-par-paquet, déterminer si la cellule cible prend en charge une continuité d'appel vocal radio unique.

14. Appareil selon la revendication 13, comprenant en outre :
un moyen d'exécution pour, lorsque la cellule cible prend en charge une continuité d'appel vocal radio unique, exécuter des procédures de continuité d'appel vocal radio unique.

15. Appareil selon la revendication 13, comprenant en outre :
un moyen de transfert pour, lorsque la cellule cible ne prend pas en charge une continuité d'appel vocal radio unique, tenter un transfert inter-système commuté-par-paquet à commuté-par-paquet pour la voix ou terminer sans aucun transfert.
